# FASCICULE DE BREVET EUROPEEN

(11) **EP 0 555 134 B1**
(45) Date de publication et mention de la délivrance du brevet: **22.05.1996**
(21) Numéro de dépôt: 93400246.0
(22) Date de dépôt: 02.02.1993
(51) Int. Cl.: D04H 1/00, D04H 18/00

(54) **Procédé d'élaboration de préformes fibreuses pour la fabrication de pièces en matériau composite et produits obtenus par le procédé**
Verfahren zur Herstellung einer Faser-Rohling für die Fertigung eines Teiles aus Verbundmaterial und nach diesem Verfahren hergestellte Produkte
Process for manufacturing of shaped fibrous structure for fabricating a composite material and products obtained thereby

(30) Priorité: 05.02.1992 FR 9201300
(43) Date de publication de la demande: 11.08.1993
(73) Titulaire: SOCIETE EUROPEENNE DE PROPULSION, F-92150 Suresnes (FR)
(72) Inventeur: Coupe, Dominique, F-33165 Le Haillan (FR); Dupont, Philippe, F-69680 Chasseu (FR); Olry, Pierre, F-33000 Bordeaux (FR)
(74) Mandataire: Joly, Jean-Jacques

(56) Documents cités:
- EP-A- 0 424 988
- FR-A- 2 414 574
- FR-A- 2 581 379
- FR-A- 2 626 294
- GB-A- 1 447 030
- US-A- 4 790 052

## Description

La présente invention concerne la fabrication de pièces en matériau composite constitué d'une texture de renfort fibreuse densifiée par une matrice.

Le domaine de l'invention est plus particulièrement celui des matériaux composites structuraux, c'est-à-dire des matériaux dont les propriétés mécaniques sont suffisantes pour constituer des pièces de structure dans des applications les plus diverses. Parmi ces matériaux, l'invention est, par exemple, applicable à la réalisation de composites thermostructuraux capables de conserver leurs propriétés mécaniques à des températures élevées par un choix approprié des fibres du renfort et de la matrice. Des matériaux composites thermostructuraux classiques sont les carbone-carbone (C/C) et les composites à matrice céramique (CMC), en particulier les composites à matice en carbure de silicium (SiC), avec des fibres de renfort en carbone (composite C/SiC) ou des fibres de renfort en carbure de silicium (composite SiC/SiC).

Pour la fabrication de composites thermostructuraux, la texture de renfort fibreuse, ou préforme, doit être préparée de manière à conférer au matériau les propriétés mécaniques souhaitées.

La préforme est obtenue généralement à partir de structures unidimensionnelles, comme des fils ou câbles ou bidimensionnelles, comme des tissus, feutres...

Les fils ou câbles sont bobinés, pour former des textures axisymétriques bobinées, ou disposés parallèlement les uns aux autres en nappes unidirectionnelles. Les nappes sont superposées, en faisant en sorte que les directions des fils ou câbles dans deux nappes voisines soient différentes.

Les tissus ou feutres sont enroulés sur eux-mêmes ou découpés en strates superposées jusqu'à atteindre l'épaisseur désirée pour la préforme.

Afin d'améliorer les propriétés mécaniques de matériaux composites dont la préforme est formée de strates ou nappes enroulées ou superposées, il a été proposé de lier les strates de nappes au moyen de fils ou fibres s'étendant transversalement à celles-ci. En effet, le phénomène de délaminage, c'est-à-dire de décohésion du matériau suivant les nappes ou strates, peut ainsi être évité.

Une technique connue et de mise en oeuvre relativement aisée pour la liaison des strates ou nappes est l'aiguilletage. Des procédés d'aiguilletage destinés à l'élaboration de préformes relativement épaisses sont notamment décrits dans le document US-A-4 790 052.

Il a été proposé, dans le document précité, ainsi que dans les documents GB-A-1 447 030 et US-A-3 971 669, de réaliser des préformes à partir de textures fibreuses de base complexes, notamment des textures de base constituées d'un tissu sur lequel a été préaiguilletée une nappe de fibres, ou de deux nappes de fils ou câbles unidirectionnels disposées de façon croisée et préaiguilletées entre elles.

Il est aussi connu du document FR-A-2 414 574 (ou GB-A-2 012 671) d'utiliser une texture de base formée par une nappe unidirectionnelle de filaments continus sur laquelle est aiguilletée une couche de fibres courtes. Des anneaux sont découpés dans la texture de base puis empilés et aiguilletés pour obtenir une préforme de disque de frein.

Le document EP-A-0 424 988 décrit également l'utilisation d'une nappe unidirectionnelle de filaments continus. La nappe est obtenue par étalement d'un câble et sa cohésion est assurée par aiguilletage. Des secteurs sont découpés dans la nappe aiguilletée puis juxtaposés et superposés avec des directions différentes et aiguilletés pour réaliser une préforme de disque de frein.

Enfin, le document FR-A-2 626 294 propose d'utiliser une texture fibreuse de base réalisée en aiguilletant plusieurs nappes unidirectionnelles formées de voiles de carde composés de fibres alignées, les nappes étant superposées de sorte que leurs fibres respectives soient orientées dans des directions différentes. Plusieurs couches de la texture ainsi obtenue sont empilées et aiguilletées pour réaliser une préforme de disque de frein.

Un but de la présente invention est de foumir un procédé particulièrement adapté à la réalisation de préformes par aiguilletage de textures fibreuses bidimensionnelles.

Un autre but de l'invention est de minimiser l'effet destructeur de l'aiguilletage vis-à-vis de l'intégrité des éléments constitutifs de la préforme.

Encore un autre but de l'invention est de foumir un procédé qui permet la préparation de préformes convenant aussi bien pour la réalisation de pièces en matériau composite d'épaisseur relativement faible que pour la réalisation de pièces plus épaisses.

Ces buts sont atteints au moyen d'un procédé du type comprenant la formation de nappes fibreuses unidirectionnelles, la superposition de nappes avec des directions différentes pour deux nappes adjacentes et l'aiguilletage des nappes superposées, procédé dans lequel, conformément à l'invention, les nappes sont constituées d'éléments qui sont formés par un assemblage de fibres ou filaments discontinus sensiblement sans torsion et parallèles entre eux et dont la cohésion est assurée par guipage au moyen d'un fil en un matériau fugitif.

Les nappes peuvent être constituées de mèches de filature ou de fils formés de fibres discontinues sans torsion.

Le guipage par un fil en matériau fugitif procure aux éléments constitutifs des nappes la cohésion suffisante pour autoriser la manipulation de celles-ci avant leur liaison par aiguilletage. Dans le document précité FR-A-2 626 294, où une texture de base est formée par aiguilletage de voiles de carde unidirectionnels, aucun moyen spécifique de maintien de fibres alignées n'est décrit.

Le matériau fugitif du fil de guipage est par exemple un alcool polyvinylique éliminable par dissolution dans l'eau, ou un polymère éliminable par traitement thermique sans laisser de résidu solide.

Lors de l'aiguilletage, des fibres ou filaments sont prélevés des éléments constitutifs des nappes pour être disposés transversalement à celles-ci et assurer la liaison entre les nappes. Du fait que les éléments constitutifs des nappes sont formés par un assemblage de fibres ou fils discontinus sans torsion, l'aiguilletage n'a pas le même effet destructeur que lorsqu'il est réalisé sur des fils formés de fibres retordues ou de câbles. En effet, dans ces derniers cas, l'aiguilletage peut provoquer la rupture des fils, ce qui amoindrit les propriétés mécaniques du renfort et, par conséquent, celles du matériau composite fabriqué avec ce renfort.

Aussi, et contrairement aux procédés traditionnels, le procédé conforme à l'invention convient pour la fabrication de préformes pour pièces minces en matériau composite, telles que des pièces en forme de voile ou de feuille rigide ayant de très bonnes propriétés mécaniques.

Les préformes peuvent être élaborées en aiguilletant directement plusieurs nappes superposées avec des directions différentes, l'aiguilletage étant réalisé avec une densité surfacique suffisante, par exemple comprise entre 20 et 300 coups/cm, pour conférer à la préforme la cohésion entre nappes nécessaire. Le procédé conforme à l'invention a ainsi permis de fabriquer des pièces en matériaux composites thermostructuraux C/C, C/SiC ou SiC/SiC ayant une résistance en traction supérieure à 250 MPa et une résistance au cisaillement interlaminaire (parallèlement aux nappes) supérieure à 30 MPa, à partir de préformes dont l'épaisseur est inférieure à 15 mm.

Pour des pièces en matériau composite plus épaisses, plusieurs nappes sont superposées avec des directions différentes et préaiguilletées pour former une texture de base. Celle-ci est ensuite utilisée pour élaborer la préforme. Avant préaiguilletage, la cohésion des nappes superposées peut être assurée au moyen d'un fil de liage. Celui-ci est identique aux fils constitutifs des nappes ou est en un matériau fugitif susceptible d'être éliminé par exemple au moyen d'un solvant ou par traitement thermique, sans laisser de résidu solide. Le préaiguilletage est réalisé de façon légère, par exemple avec une densité surfacique comprise entre 5 et 40 coups/cm, juste suffisante pour permettre la manipulation de la texture de base. Celle-ci est ensuite utilisée pour élaborer la préforme qui peut être formée par superposition et aiguilletage de couches de la texture de base préaiguilletée, ou par bobinage et aiguilletage d'une bande de la texture de base préaiguilletée. L'aiguilletage de couches ou spires superposées de la texture de base est réalisé par exemple comme décrit dans le document précité US-A-4 790 052.

Des exemples de mise en oeuvre du procédé selon l'invention pour la réalisation de pièces épaisses sont donnés ci-après, à titre indicatif mais non limitatif, dans le cadre de la fabrication de pièces en matériaux composites thermostructuraux.

La préforme est réalisée en fibres utilisées traditionnellement pour la fabrication de tels composites, comme les fibres aramide, les fibres carbone ou les fibres céramique (carbures, oxydes, siliciures, borures, etc., par exemple carbure de silicium ou carbonitrure de silicium).

Dans le cas de fibres carbone, et surtout de fibres céramique, l'élaboration de la préforme, en particulier au stade de l'aiguilletage, peut être réalisée sur un précurseur des fibres, comme cela est connu en soi. Le terme de précurseur s'entend comme étant tout stade intermédiaire dans l'élaboration des fibres, que ce soit le précurseur organique proprement dit ou à un stade ultérieur de traitement thermique qui permet d'optimiser le caractère textile de la fibre afin d'assurer un bon aiguilletage. Ainsi, à titre d'exemple, pour une préforme en fibres de carbone à précurseur polyacrylonitrile (PAN), l'aiguilletage peut être réalisé sur des fibres à l'état PAN préoxydé, avant carbonisation, tandis que, pour une préforme en fibres de carbure de silicium à précurseur polycarbosilane (PCS), l'aiguilletage peut être réalisé sur des fibres en précurseur à l'état infusible, après traitement thermique modéré complétant la réticulation, et avant céramisation.

Toutefois, l'aiguilletage peut aussi être réalisé directement sur des fibres carbone ou céramique. En effet, les fibres discontinues et non retordues peuvent être entraînées par les aiguilles alors qu'un aiguilletage réalisé directement sur des filaments continus ou des fils retordus en carbone ou céramique est inenvisageable en raison de son effet destructeur.

### Exemple 1

Trois nappes unidirectionnelles formées de fils de fibres discontinues non retordues en PAN préoxydé sont superposées avec des directions mutuellement décalées de 60°. Les fils en PAN préoxydé constitutifs des nappes ont pour titre N.m.5 et sont guipés par un fil d'alcool polyvinylique de 45 dtex qui leur donne la cohésion nécessaire. Les trois nappes sont liées par un fil d'alcool polyvinylique identique au fil de guipage. La masse surfacique de l'ensemble est de 800 g/m.

Le nappage et le liage sont réalisés par des moyens connus, par exemple comme décrit dans le brevet US 4 677 831.

Les nappes liées sont préaiguilletées avec une densité de 35 coups/cm puis immergées dans un bain d'eau chaude à 80°C pour dissoudre les fils de guipage et de liage. On obtient ainsi une texture de base directement aiguilletable.

Des couches formées par la texture de base préaiguilletée sont successivement superposées et aiguilletées pour réaliser une préforme fibreuse, par exemple comme décrit dans le document FR-A-2 584 106. La densité d'aiguilletage est de 50 coups/cm. Après traitement thermique de carbonisation du PAN préoxydé, une préforme aiguilletée en fibres de carbone ayant un taux volumique de fibres égal à 30 % est obtenue (le taux volumique de fibres est le pourcentage du volume apparent de la préforme effectivement occupé par les fibres).

### Exemple 2

Trois nappes unidirectionnelles formées de fils en fibres discontinues non retordues en carbone sont superposées, les directions des fils des nappes formant des angles égaux à 90°, +45° et -45° par rapport à la direction longitudinale de la bande. Les fils en carbone constitutifs des nappes ont pour titre N.m.5 et sont guipés par un fil d'alcool polyvinylique de 45 dtex. Les trois nappes sont liées par un fil de fibres de carbone discontinues non retordues de titre N.m.15 guipé par un fil d'alcool polyvinylique de 45 dtex. La masse surfacique de l'ensemble est de 600 g/m.

Après élimination des fils de guipage par immersion dons un bain d'eau chaude à 80°C pendant 30 min et séchage, on obtient une texture de base en carbone formée de nappes liées et directement aiguilletable.

Une préforme axisymétrique est réalisée en bobinant et en aiguilletant simultanément la texture de base sur un mandrin, comme décrit dans le document FR-A-2 584 107. La densité d'aiguilletage est de 50 coups/cm. Une préforme d'épaisseur 60 mm, de largeur 500 mm et de diamètre intérieur 200 mm ainsi réalisée présente un taux volumique de 35 %.

### Exemple 3

Il est procédé comme dans l'exemple 2 à l'exception du liage des nappes qui est réalisé au moyen d'un fil de polyéthylène à haute ténacité (fil à hautes caractéristiques mécaniques commercialisé sous la dénomination "Dyneema" par la Société des Pays-Bas DSM).

Après élimination des fils de guipage par immersion dans un bain d'eau chaude à 80°C pendant 30 min, et séchage, il est procédé à un préaiguilletage avec une densité de 35 coups/cm. Les nappes sont ensuite déliées par élimination du fil de polyéthylène par traitement thermique à 300°C. On obtient ainsi une texture de base en carbone directement aiguilletable.

Dans les exemples qui précèdent, le préaiguilletage éventuel de la texture de base et l'aiguilletage de la préforme sont réalisés de façon conventionnelle au moyen d'aiguilles à barbes ou à fourche.

Il est toutefois possible d'effectuer le préaiguilletage et/ou l'aiguilletage au jet d'eau.

En outre, lors de la fabrication de la préforme, il est possible d'intercaler, entre des couches de la texture de base, d'autres strates ou couches fibreuses, par exemple en feutre.

## Revendications

1. Procédé d'élaboration de préforme fibreuse destinée à constituer une texture de renfort d'une pièce en matériau composite, comprenant la formation de nappes fibreuses unidirectionnelles, la superposition de nappes avec des directions différentes pour deux nappes adjacentes et l'aiguilletage des nappes superposées, caractérisé en ce que l'on utilise des nappes constituées d'éléments qui sont formés par un assemblage de fibres ou filaments discontinus sensiblement sans torsion et parallèles entre eux et dont la cohésion est assurée par guipage au moyen d'un fil en matériau fugitif.

2. Procédé selon la revendication 1, caractérisé en ce que les nappes sont constituées de mèches de filature.

3. Procédé selon la revendication 1, caractérisé en ce que les nappes sont constituées de fils formés de fibres discontinues sans torsion.

4. Procédé selon l'une quelconque des revendications 1 à 3, caractérisé en ce que plusieurs nappes sont aiguilletées pour former directement une préforme d'épaisseur relativement faible.

5. Procédé selon la revendication 4, caractérisé en ce que la densité surfacique d'aiguilletage est comprise entre 20 et 300 coups/cm.

6. Procédé selon l'une quelconque des revendications 1 à 3, caractérisé en ce que plusieurs nappes sont préaiguilletées pour former une texture de base, puis la préforme est élaborée par aiguilletage de plusieurs strates ou couches dont au moins certaines sont formées par ladite texture de base.

7. Procédé selon la revendication 6, caractérisé en ce que, avant préaiguilletage, les nappes sont assemblées entre elles au moyen d'un fil de liage.

8. Procédé selon la revendication 7, caractérisé en ce que le fil de liage est en un matériau fugitif.

9. Procédé selon la revendication 7, caractérisé en ce que le fil de liage est un fil identique à celui constituant les nappes.

10. Procédé selon l'une quelconque des revendications 6 à 9, caractérisé en ce que la densité surfacique de préaiguilletage de la texture de base est comprise entre 5 et 40 coups/cm.

11. Procédé selon l'une quelconque des revendications 1 à 10, caractérisé en ce que l'on utilise des nappes constituées d'éléments formés de fibres en un matériau choisi parmi le carbone, les céramiques et leurs précurseurs.

12. Préforme constituant une texture de renfort fibreuse pour une pièce en matériau composite, élaborée selon le procédé de l'une quelconque des revendications 5 et 6, caractérisée en ce que son épaisseur est inférieure à 15 mm.

13. Pièce en forme de voile ou feuille rigide en matériau composite thermostructural, caractérisée en ce qu'elle comprend une préforme selon la revendication 12.

## Patentansprüche

1. Verfahren zur Herstellung eines Faservorformlings zur Herstellung einer Verstärkungsstruktur eines Werkstücks aus Verbundwerkstoff, bei dem in einer Richtung verlaufende Faservliese gebildet, die Faservliese mit unterschiedlichen Richtungen für zwei benachbarte Faservliese übereinandergelegt und die übereinandergelegten Fasern vernäht werden,
**dadurch gekennzeichnet, daß**
Faservliese verwendet werden, die aus Elementen bestehen, die durch Zusammenfügen von diskontinuierlichen, im wesentlichen verdrehungsfreien und untereinander parallelen Fasern oder Filamenten gebildet werden, deren Haftung durch Umspinnen mittels eines Fadens aus einem flüchtigen Material bewirkt wird.

2. Verfahren nach Anspruch 1,
**dadurch gekennzeichnet, daß**
die Faservliese aus Spinnbändern bestehen.

3. Verfahren nach Anspruch 1,
**dadurch gekennzeichnet, daß**
die Faservliese aus Fäden bestehen, die aus diskontinuierlichen verdrehungsfreien Fasern gebildet sind.

4. Verfahren nach einem der Ansprüche 1 - 3,
**dadurch gekennzeichnet, daß**
mehrere Faservliese vernäht werden, um direkt einen Vorformling relativ geringer Dicke zu bilden.

5. Verfahren nach Anspruch 4,
**dadurch gekennzeichnet, daß**
die Oberflächennadelungsdichte 20 bis 300 Stiche/cm beträgt.

6. Verfahren nach einem der Ansprüche 1 - 3,
**dadurch gekennzeichnet, daß**
mehrere Faservliese vorvernäht werden, um eine Grundstruktur zu bilden, und daß dann der Vorformling durch Vernähen mehrerer Lagen oder Schichten hergestellt wird, von denen wenigstens einige aus dieser Grundstruktur gebildet sind.

7. Verfahren nach Anspruch 6,
**dadurch gekennzeichnet, daß**
die Faservliese vor dem Vorvernähen untereinander durch einen Verbindungsfaden verbunden werden.

8. Verfahren nach Anspruch 7,
**dadurch gekennzeichnet, daß**
der Verbindungsfaden aus einem flüchtigen Material besteht.

9. Verfahren nach Anspruch 7,
**dadurch gekennzeichnet, daß**
der Verbindungsfaden ein Faden gleich dem ist, der die Faservliese bildet.

10. Verfahren nach einem der Ansprüche 1 - 9,
**dadurch gekennzeichnet, daß**
die Oberflächennadelungsdichte der Grundstruktur 5 - 40 Stiche/cm beträgt.

11. Verfahren nach einem der Ansprüche 1 - 10,
**dadurch gekennzeichnet, daß**
Faservliese verwendet werden, die aus Elementen bestehen, die aus Fasern aus einem Material gebildet werden, das aus Kohlenstoff, Keramik und ihren Precursorn gewählt wird.

12. Eine Faserverstärkungsstruktur bildender Vorformling für ein Werkstück aus einem Verbundwerkstoff, hergestellt nach einem Verfahren nach Anspruch 5 oder 6,
**dadurch gekennzeichnet, daß**
seine Dicke weniger als 15 mm beträgt.

13. Werkstück in Form eines starren Vlieses oder einer starren Folie aus einem thermostrukturellen Verbundwerkstoff,
**dadurch gekennzeichnet, daß**
es einen Vorformling nach Anspruch 12 aufweist.

## Claims

1. Method of making a fiber preform intended for constituting a reinforcing fabric for a part made of composite material, comprising the steps of forming one-directional fiber sheets, superposing the sheets with pairs of adjacent sheets having different directions, and needling together the superposed sheets, characterized in that sheets are used that are made up of elements which are formed by assembling together mutually parallel discontinuous filaments or fibers substantially without twisting with cohesion between the fibres or filaments being provided by covering by means of a yarn of fugitive material.

2. Method according to claim 1, characterized in that the sheets are made of slivers.

3. Method according to claim 1, characterized in that the sheets are made of yarns formed by non-twisted discontinuous fibers.

4. Method according to any one of claims 1 to 3, characterized in that a plurality of sheets are needled together for directly forming a preform of relatively small thickness.

5. Method according to claim 4, characterized in that the needling density per unit area lies in the range of 20 punches/cm to 300 punches/cm.

6. Method according to any one of claims 1 to 3, characterized in that a plurality of sheets are pre-needled to form a basic fabric, after which the preform is made by needling together a plurality of plies or layers, at least some of which are formed by said basic fabric.

7. Method according to claim 6, characterized in that, prior to pre-needling, the sheets are assembled together by means of a bonding yarn.

8. Method according to claim 7, characterized in that the bonding yarn is made of a fugitive material.

9. Method according to claim 7, characterized in that the bonding yarn is a yarn identical to that constituting the sheets.

10. Method according to any one of claims 6 to 9, characterized in that the density per unit area of the pre-needling in the basic structure lies in the range of 5 punches/cm to 40 punches/cm.

11. Method according to any one of claims 1 to 10, characterized in that sheets are used that are constituted by elements formed from fibers of a material selected from carbon, ceramics, and precursors therefor.

12. Preform constituting a fiber reinforcing fabric for a composite material part, made according to the method of any one of claims 5 and 6, characterized in that its thickness is less than 15 mm.

13. Part in the form of a rigid foil or web in thermo-structural composite material, characterized in that it comprises a preform according to claim 12.
